# EUROPÄISCHE PATENTANMELDUNG

(11) **EP 0 819 520 A2**
(43) Veröffentlichungstag der Anmeldung: **21.01.1998**
(21) Anmeldenummer: 97110626.5
(22) Anmeldetag: 28.06.1997
(51) Int. Cl.: B32B 31/28, B05D 3/06, B05D 7/04

(54) **Verfahren zum Lackieren von dreidimensional gewölbten Flächen formbeständiger Substrate mit einer Lackfolie sowie Verfahren zur Herstellung einer derartigen Lackfolie**

(30) Priorität: 18.07.1996 DE 19628966
(71) Anmelder: Daimler-Benz Aktiengesellschaft, 70546 Stuttgart (DE)
(72) Erfinder: Negele, Oswin, Dr., 71404 Korb (DE); Holdik, Karl, Dr., 89081 Ulm (DE)

(57) **Zusammenfassung**

Die Erfindung betrifft ein Applikationsverfahren von Lackfolien auf dreidimensional gewölbten Substraten sowie ein Herstellungsverfahren von Lackfolien. Zum Applizieren der Lackfolie, die wenigstens eine Lackschicht und eine Kleberschicht aufweist, wird die strahlungshärtbare Lackschicht der Lackfolie vor dem Aufbringen auf das Substrat klebefrei teilgehärtet und nach dem Aufbringen mit elektromagnetischer Strahlung unterhalb der Wellenlänge des sichtbaren Spektrums beaufschlagt und endgehärtet. Zur Herstellung einer Lackfolie wird die Lackschicht klebefrei teilgehärtet und in diesem Zustand bis zur Applikation auf einem Substrat zwischengespeichert wird, wobei die Lackschicht zumindest mittelbar auf eine endlos umlaufende glatte Unterlage aufgetragen und mit der Kleberschicht versehen wird und wobei die Lackschicht von der Walze abgelöst wird.

## Beschreibung

Die Erfindung betrifft ein Verfahren zum Applizieren einer Lackfolie auf dreidimensional gewölbte Flächen formstabiler Substrate gemäß dem Oberbegriff des Anspruchs 1 sowie ein Verfahren zur Herstellung derartiger Lackfolien gemäß dem Oberbegriff des Anspruchs 4, wie beides aus der gattungsbildend zugrundegelegten EP 361 351 A1 als bekannt hervorgeht.

Aus der EP 361 351 A1 ist ein Verfahren zum Lackieren von dreidimensional gewölbten Flächen formstabiler Substrate mit einer Lackfolie bekannt. Die verwendete Lackfolie ist aus einer Trägerfolie, einer Klebeschicht und einer Lackschicht gebildet. Vor der Applikation der Lackfolie wird die strahlungshärtbare Lackschicht der Lackfolie derart teilgehärtet, daß sie staubtrocken ist. Anschließend wird die Lackfolie erwärmt und auf das ggf. ebenfalls erwärmte Substrat aufgezogen. Nach erfolgter Applikation der Lackfolie wird die Lackschicht thermisch endgehärtet, wobei gleichzeitig die Abbindereaktion zwischen der Kleberschicht und der Lackschicht und dem Substrat vorgenommen werden kann.

Aus unterschiedlichen Materialien gebildete Substrate, bspw. Übergänge zwischen Blechteilen und Kunststoffteilen an einer Pkw-Karosserie oder in einem Kfz-Innenraum müssen unter Umständen unabhängig voneinander lackiert werden, da insbesondere beim Kunststoff die Endhärtung metalltauglicher Lackschichten mit einer unzulässig hohen thermischen Belastung verbunden ist. Des weiteren kann durch die notwendige Verwendung verschiedener Lackfolien ein unterschiedlicher Lackeindruck entstehen.

Ferner weisen die Lackfolien eine Trägerfolie auf, die - bei mittlerer Anordnung der Trägerfolie - am Produkt verbleiben oder - bei Außenanordnung der Trägerfolie - nach der Applikation der Lackfolie entfernt und ggf. recycelt werden. In beiden Fällen ist der Materialauffwand hoch, wodurch die Masse der zur Lackierung zu verwendenden Lackfolie und auch die Herstellungskosten hoch sind.

Die Aufgabe der Erfindung ist es, das zugrundegelegte Applikationsverfahren dahingehend weiterzuentwickeln, daß es universeller verwendbar ist. Desweiteren ist es Aufgabe der Erfindung ein kostengünstiges Herstellungsverfahren derartiger Lackfolien anzugeben.

Die Aufgabe wird erfindungsgemäß bei dem zugrundegelegten Applikationsverfahren mit den kennzeichnenden Verfahrensschritten des Anspruchs 1 und bzgl. des zugrundegelegten Herstellungsverfahrens mit den kennzeichnenden Verfahrensschritten des Anspruchs 4 gelöst.

Durch die Endhärtung mittels der elektromagnetischen Strahlung im beanspruchten Wellenlängenbereich, wird das Substrat allenfalls geringfügig belastet. Anzumerken ist hierbei, das bei einer Endhärtung der Lackschicht mittels Elektronenstrahlung, die Elektronenstrahlen im Wellenbild, also hinsichtlich ihrer Wellenlänge zu betrachten sind.

Insbesondere ist auch die Herstellung der nur eine Lackschicht und eine Kleberschicht aufweisenden Lackfolie günstig, da hierbei auf die bislang vorhandene Trägerfolie verzichtet werden kann, die somit - wie bislang im Falle einer außenseitig angeordneten Trägerfolie - nicht mehr von dem mit der Lackfolie versehenen Substrat, insbesondere eine Fahrzeugkarosserie eines Automobils, separat entfernt werden muß, bzw. - im Falle einer bislang mittig angeordneten Trägerfolie - an demselben verbleibt.

Weitere sinnvolle Ausgestaltungen sind den entsprechenden Unteransprüchen entnehmbar. Im übrigen wird die Erfindung anhand von in den Figuren dargestellten Ausführungsbeispielen nähers erläutert. Dabei zeigt
- Fig. 1: einen Ausschnittsvergrößerung einer auf einem Substrat applizierten Lackfolie und
- Fig. 2: einen Ausschnitt einer Apparatur zur Herstellung einer erfindungsgemäßen Lackfolie, bei der auf die Unterlage zuerst die Kleberschicht aufgetragen wird, und
- Fig. 3: einen Ausschnitt einer Apparatur zur Herstellung einer erfindungsgemäßen Lackfolie, bei der auf die Unterlage zuerst die Lackschicht aufgetragen wird und
- Fig. 4: a bis f eine Lackfolie zum Tiefziehen und mehrere Verfahrenschritte eines dazugehörigen Verfahrens zum Hinterschäumen bzw. Hinterspritzen dieser Lackfolie.

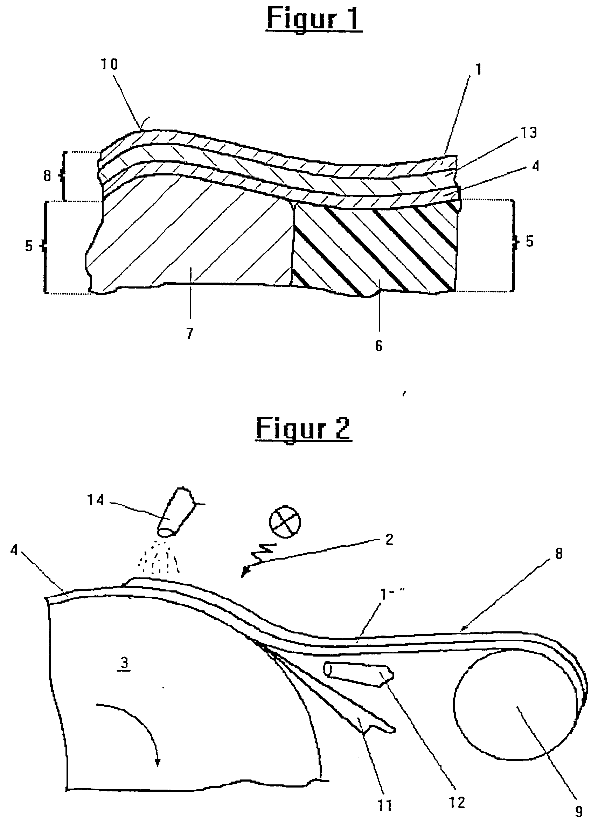

In Figur 1 ist ein dreidimensional gewölbtes Substrat 5 bestehend aus einem Kunststoffteil 6 und einem Blechteil 7 insbesondere einer Karosserie eines Personenkraftwagens dargestellt, auf dem eine Lackfolie 8 appliziert ist.

Die tackfolie 8 ist aus einer Lackschicht 1 und einer Kleberschicht 4 gebildet. Für die Kleberschicht 4 wird sinnvollerweise ein reaktivierbarer Kleber verwendet, da dadurch die gesamte Lackfolie 8 vor deren Applikation auf einem Substrat 5 bspw. als Rolle 9 auf einfache Weise zwischengelagert werden kann.

Gegebenenfalls kann die Lackfolie 8 noch eine stabilisierend wirkende Trägerfolie 13 aufweisen, die im vorliegenden Fall mittig, also zwischen der Kleber- 4 und der Lackschicht 1, angeordnet ist. Je nach Anwendungsfall kann die Trägerfolie 13 aber auch außenseitig, also zur Sichtseite 10 hin, angeordnet sein.

Vor der Applikation der Lackfolie 8 und vor deren Zwischenlagerung als Rolle 9 wird die strahlenhärtbare Lackschicht 1 klebefrei und staubtrocken teilgehärtet. Die Teilhärtung kann hierbei durch Strahlung 2, wie Infrarot-, Hitze-, Ultraviolett und/oder Elektronenstrahlung oder dgl. erfolgen.

Zum blasen- und faltenfrei sowie orangenhautfreien Applizieren der eine teilgehärtete Lackschicht 1 aufweisenden Lackfolie 8 auf dem aus unterschiedlichen Materialien gefertigten Substrat 5 ist es günstig, die Lackfolie 8 und/oder das Substrat 5 vorzuwärmen.

Als günstig hat es sich hierbei erwiesen, für die Lackschicht 1 einen Lack mit einer Glasübergangstemperatur unterhalb 40 °C, insbesondere unterhalb 30 °C zu wählen, so daß zur Applikation der Lackfolie 8 auf dem Substrat 5 die Lackschicht 1 auf ihre Glasübergangstemperatur oder geringfügig oberhalb ihrer Glasübergangstemperatur erhitzt werden kann.

Sinnvollerweise wird die Erwärmungstemperatur bei der Appplikation derart gewählt, daß die Lackfolie 8 elastisch appliziert werden kann. Zweckmäßigerweise ist die Erwärmungstemperatur gleichzeitig unterhalb einer kritischen Temperatur für das Substrat 5 angeordnet, bei der eine Zerstörung hinsichtlich des Materials des Substrats 5 und/oder eine Erweichung des Materials des Substrat 5 mit der bspw. eine Entformung stattfinden kann.

Diese Wahl der Materialien der Lackfolie 8 hinsichtlich der Erwärmungstemperatur sichert, daß keine bleibende thermische Beeinträchtigung oder eine Zerstörung des Substrats 5 erfolgt. Durch diese Maßnahme können insbesondere Substrate 5 aus unterschiedlichen Materialien mit der gleichen Lackfolie 8 versehen werden, wodurch das Substrat 5 über die gesamte Fläche des Substrats 5 den gleichen Farbeindruck aufweist.

Die elastisch und vorzugsweise gespannt auf das Substrat 5 appilzierte Lackfolie 8 wird zur Endhärtung einer insbesondere elektromagnetischen Strahlung 2 ausgesetzt, deren Wellenlänge unterhalb derjenigen des sichtbaren Spektrums angeordnet ist. Innerhalb dieser Definition sind auch Elektronenstrahlen zu verstehen, die - aufgrund des vorliegenden Wellen-Teilchendualismus im Wellenraum - hinsichtlich ihrer Wellenlänge zu betrachten sind.

Durch die Strahlung 2 wird die Lackschicht 1 endausgehärtet bzw. endvernetzt. Durch diese Art der Endhärtung der Lackschicht 1 bei zweckmäßigerweise gleichzeitiger Strahlungshärtung der insbesondere aktivierbaren Kleberschicht 4 werden die Materialien des Substrats 5 allenfalls geringfügig beansprucht.

Desweiteren kann durch diese Art der Teil- und der Endhärtung der Lackschicht 1 die Lackfolie 8 thermoplastisch appliziert und nach erfolgter Applikation duroplastisch vernetzt werden.

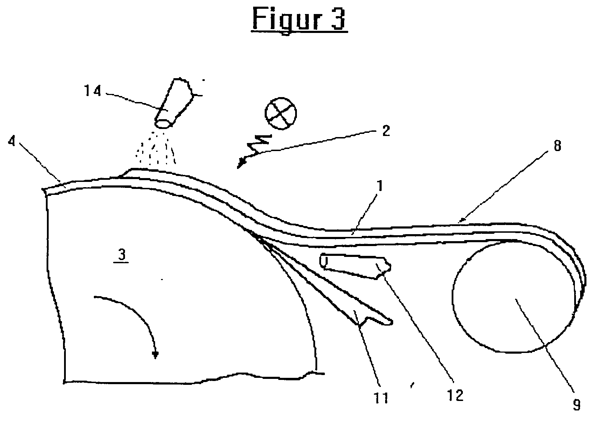

Im folgenden wird die Herstellung einer insbesondere für die oben genannte Applikation günstigen trägerfolienfreien Lackfolie 8 eingegangen. Eine Apparatur zur Herstellung einer derartigen Lackfolie 8 ist ausschnittsweise in den Figuren 2 und 3 dargestellt.

Einer der Unterschiede zwischen den beiden Darstellungen gemäß den Figuren 2 und 3 ist darin zu sehen, daß bei der Apparatur gemäß Figur 2 auf die Unterlage 3 zuerst die Kleberschicht 4 und bei der Apparatur gemäß Figur 3 zuerst die Lackschicht 1 abgeschieden wird.

Die etwa baugleichen Apparaturen weisen eine endlos umlaufende Unterlage 3 auf, die wie in den vorliegenden Fällen durch die polierte Oberfläche einer umlaufenden Walze gebildet ist. Als Alternative hierzu kann die Unterlage 3 auch durch ein umlaufendes Transportband mit glatter Oberfläche ausgebildet werden.

Die Herstellung kann, wie im folgen erläutert wird, auf unterschiedliche Arten verwirklicht werden.

Gemäß Figur 1 wird auf den die Unterlage 3 bildenden Mantel der Walze die Kleberschicht 4 durch bspw. Aufwalzen oder Aufspritzen (nicht dargestellt) aufgetragen, die insbesondere aus einem aktivierbaren Schmelzkleber gebildet ist. Auf die Kleberschicht 4 wird anschließend die Lackschicht 1 aufgetragen. Die Auftragung der Lackschicht 1 erfolgt im vorliegenden Ausführungsbeispiel unter Zuhilfenahme der Spritzdüse 14. Die Lackschicht 1 wird während und/oder nach dem Auftragen und durch Erwärmung teilgehärtet bzw. teilvernetzt. Die Teilhärtung der Lackschicht 1 wird bis zur Klebefreiheit bzw. bis zur Staubtrockenheit der Lackschicht 1 vorgenommen.

Der Auftrag der Lackschicht 1 auf die Kleberschicht 4 kann noch bei auf der Unterlage 3 berindlicher Kleberschicht 4 erfolgen. Bei genügender Stabilität der Kleberschicht 4 ist der Auftrag der Lackschicht 1 auf die Kleberschicht 4 auch bei bereits von der Unterlage 3 abgelöster Kleberschicht 4 möglich.

In beiden Fällen kann die Teilhärtung der Lackschicht 1 bei abgelöster Lackfolie 8 erfolgen. Bei im Bereich der Unterlage aufgetragener Lackschicht 1 ist es sinnvoll, die Teilhärtung noch bei auf der Unterlage 3 angeordneter Lackfolie 8 vorzunehmen. Die jeweilige Vorgehensweise ist von unterschiedlichen Faktoren wie z.B. der Stabilität der Kleberschicht 4 u.a. abhängig.

In Figur 3 wird zur Herstellung der Lackfolie 8 zuerst die Lackschicht 1 auf die Unterlage 3 abgeschieden. Bei dieser Vorgehensweise ist u.a. wichtig, daß die Unterlage 3 eine hohe Qualität aufweist, also bspw. poliert ist. Wie schon zuvor kann die zweite Schicht der Lackfolie 8, hier also die Kleberschicht 4, anschließend auf die teilgehärtete bzw. teilvernetzte Lackschicht 1 aufgebracht werden. Die Teilhärtung kann je nach Stabilität der Lackschicht 1 noch bei auf der Unterlage 3 oder auch bei bereits von der Unterlage 3 abgelöster Lackschicht 1 erfolgen.

Zur Ablösung der Lackschicht 1 und/oder der Kleberschicht 4 und/oder der mit einer Lackschicht 1 versehenen Kleberschicht 4 weisen die in den Figuren 2 und 3 dargestellten Apparaturen ein Schabetnesser 11 auf.

Anstelle der Entfernung des auf die Unterlage 3 aufgebrachten Belags (Lackfolie 8 oder Kleber- 4 oder Lackschicht 1) mittels des Schabemessers 11 oder auch zur Unterstützung des Schabernessers 11 kann die Apparatur noch eine Blas-Einrichtung (dargestellt durch die Düse 12) aufweisen. Die Blas-Einrichtung unterstützt die Entfernung des jeweiligen Belags mittels des Schabemessers 11 oder ist zur alleinigen Entfernung des Belags vorgesehen.

Zur Entfernung des Belags mittels der Blas-Einrichtung wird günstigerweise erwärmte Druckluft verwendet, da dann gleichzeitig eine Teiltrocknung der Lackschicht 1 und/oder der aktivierbaren Kleberschicht 4 realisierbar ist.

Die Blas-Einrichtung kann entgegen oder ergänzend zu der in den Figuren 2 und 3 dargestellten Düse 12 auch dadurch verwirklicht werden, daß die Unterlage 3 aus einem porösen Material gebildet ist, durch das Druckluft auf die Unterseite des abzulösenden Belags geblasen wird.

Von besonderem Vorteil ist es, wenn als Binder für die Lackschicht 1 oder im Falle eines mehrlagigen Aufbaus der Lackschicht 1 wenigstens für deren außenseitige Lage Phosphazen und/oder Phosphazenharz und/oder deren Derivate und/oder deren Vorprodukte verwendet werden.

Derartige Lackfolien 8 weisen neben einer guten Verarbeitbarkeit bei der Herstellung und der Applikation auf Substrat 5 auch eine ausgezeichnet Kratzfestigkeit auf.

Ferner können diese Lackfolien 8 mit einer guten Umweltverträglichkeit hergestellt werden, so daß notwendige Maßnahmen zu Schutz der Umwelt weitgehend vermindert sind. Desweiteren sind diese Lackfolien auch preisgünstig herzustellen.

Als weiterer Vorteil dieser Lackfolien 8 ist anzumerken, daß sie nach der Teilhärtung thermoplastisch sind, während sie nach der Endhärtung - nach erfolgter Applikation der Lackfolie 8 - duroplastisch vernetzbar sind. Daher sind die fertig applizierten Lackfolien schleif- und polierbar. Bei geringfügigen Beschädigungen bietet die Polier- und Schleifbarkeit den Vorteil, daß die mit derartigen Lackfolien beschichteten Substrate in der Art von Ausbesserungen einfach repariert werden können.

Dieser Umstand ist vorzugsweise bei der Verwendung von derartigen Lackfolien 8 als hochwertige Dekorfolien günstig, da diese bislang zumeist aus Fluorthermolasten (z.B. PVDF) kostenintensiv und auf ökologisch bedenkliche Weise hergestellt werden. Des weiteren sind Lackfolien auf PVC und PVDF nicht polier- und schleifbar, weshalb sie auch nicht in geringen Flächen repariert werden können.

Ferner kann es bei geringerer Kratzfestigkeit der Lackfolie 8 sinnvoll sein, als Binder für die Lackschicht 1 oder im Falle eines mehrlagigen Aufbaus der Lackschicht 1 wenigstens für deren außenseitige Lage Urethan und/oder dessen Derivate und/oder dessen Vorprodukte zu wählen.

Eine weitere Möglichkeit für den Binder ist es Acrylate und/oder deren Derivate und/oder deren Vorprodukte zu wählen.

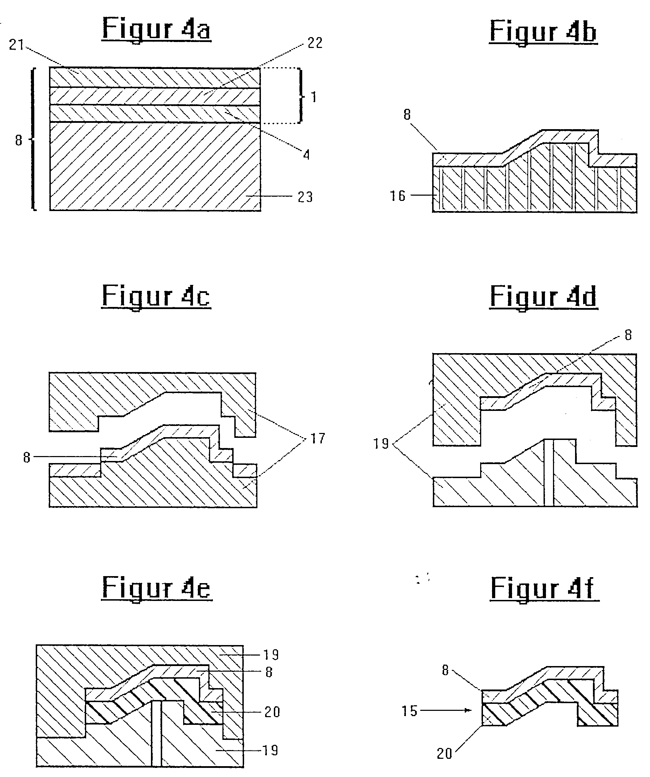

In Figur 4a ist eine Lackfolie 8 dargestellt, die zum Hinterschäumen bzw. Hinterspritzen mit Kunststoff geeignet ist. Die für ein derartiges Verfahren bevorzugte Lackfolie 8 gemäß Figur 4a weist folgenden Schicht- oder Lagenaufbau auf: die sichtseitig äußere Lage 21 ist aus Klarlack, die darauffolgende Schicht 22 ist eine farb- und/oder effektgebende Schicht, die nachfolgende Schicht ist eine Kleberschicht 4 und die letzte Schicht, also die der Hinterspritzung zugewandte Schicht ist eine Materiallage 23, die beim Hinterspritzen mit dem zu hinterspritzenden Material ohne Zugabe von weiteren Substanzen insbesondere monolitiosch verbindbar ist. Bevorzugt ist diese Materiallage 23 aus dem gleichen Material wie das zu hinterspritzende Material hergestellt.

In den weiteren Figuren 4b bis 4f sind mehrere Verfahrensschritte des dazugehörigen Verrahrens zur Herstellung eines mit einer Lackfolie 8 dekorierten und hinterspritzen Gegenstand 15 (siehe Figur 4f) dargestellt.

In Figur 4b wird die Lackfolie thermisch vorzugsweise auf eine Temperatrur im Bereich der Glasübergangstemperatur der Lackschicht 1 der Lackfolie 8 erhitzt und über eine Patrize 18 mittels Vakuum insbesondere falten-frei und bleibend tiefgezogen. Die tiefgezogen Lackfolie 8 wird - wie in Figur 4c dargestellt entsprechend einer gewünschten umlaufen Kontur in einem Stanzwerkzeug 17 ausgestanzt.

Die gestanzte und teifgezogene Lackfolie 8 wird in einen Spritzgießform 19 eingelegt und mit einem Kunststoff 20 hinterspritzt. Das Hinterspritzen erfolgt zweckmäßigerweise im Bereich der Glasübergangstemperatur der Lackschicht 1. Zum formgetreuen Ausbilden des hinterspritzt herzustellenden und fertig dekorierten Gegenstandes kann die elastische Lackfolie 8 beim Hinterspritzen gleichzeitig gegen die negativ zu der gewünschten Form des Gegenstandes 15 gearbeiteten Begrenzugen der Spritzgießform 19 gepreßt werden. Nach der Aushärtung des hinterspritzten Kunststoffes 20 wird der fertig dekorierte Gegenstand 15 aus dem Spritzgießform 19 entnommen und die Lackschicht 8 mittels Strahlenhärtung duroplastisch gehärtet.

Bei einem wie in Figur 4a dargestellten mehrlagigen Aufbau der Lackschicht 1 kann nur die äußere Lage 21, die in diesem Fall aus Klarlack gebildet ist, gehärtet werden, wobei eine farbgebende und/oder effektgebende Schicht 22 der Lackschicht 1 thertnoplastisch verbleibt. Unter einer effektgebenden Schicht sind insbesondere derartige Schichten zu verstehen, die Pigmente mit orientiert dreidimensional vernetzte flüssigkristalline Substanzen mit chiraler Phase aufweisen, welche Pigmente - eine vom Betrachtungswinkel abhängige Farbigkeit bewirken. Derartige Pigmente sind insdbesondere aus der EP 601 483 B1 bekannt. Dies ist u.a. daher sinnvoll, da eine Strahlenhärtung der farb- und/oder effektgebenden Schicht 22 apperativ aufwendig ist.

Soll die farbgebende und/oder effektgebende Schicht dennoch gleichfalls duroplastisch gehärtet werden, erfolgt die Endhärtung der farb- und/oder effektgebenden Schicht 22 zweckmäßigerweise mittels Elektronenstrahlen.

Bei einem derartigen Verfahren ist insbesondere die in Figur 4 a dargestellte Lackfolie 8 nützlich. Der Schicht- oder Lagenaufbau der Lackfolie ist wie folgt: Klarlack, Farb- und/oder Effektschicht, ggf. Kleberschicht und zuletzt, also der Hinterspritzung zugewandt, eine Materiallage, die beim Hinterspritzen mit dem zu hinterspritzenden Material ohne Zugabe von weiteren Substanzen insbesondere monolitiosch verbindbar ist. Bevorzugt ist diese Materiallage aus dem gleichen Material wie wie das zu hinterspritzende Material hergestellt.

## Patentansprüche

1. Verfahren zum Appilzieren einer Lackfolie auf dreidimensional gewölbte Flächen formstabiler Substrate, welche Lackfolie wenigstens eine Lackschicht und eine Kleberschicht aufweist, bei welchem Verfahren die strahlungshärtbare Lackschicht der Lackfolie vor dem Aufbringen auf das Substrat klebefrei teilgehärtet und nach dem Aufbringen endgehärtet wird,
**dadurch gekennzeichnet,**
daß die Lackschicht (1) nach den Aufbringen mit elektromagnetischer Strahlung (2) unterhalb der Wellenlänge des sichtbaren Spektrums beaufschlagt und endgehärtet wird.

2. Verfahren nach Anspruch 1,
**dadurch gekennzeichnet,**
daß zur Applikation der Lackfolie (8) auf dem Substrat (5) die Lackschicht (1) auf ihre Glasübergangstemperatur oder geringfügig oberhalb ihrer Glasübergangstemperatur erhitzt wird.

3. Verfahren nach Anspruch 1,
**dadurch gekennzeichnet,**
daß für die Lackschicht (1) ein Lack mit einer Glasübergangstemperatur unterhalb 40 °C, insbesondere unterhalb 30 °C gewählt wird und daß zur Applikation der Lackfolie (8) auf dem Substrat (5) die Lackschicht (1) auf ihre Glasübergangstemperatur oder geringfügig oberhalb ihrer Glasübergangstemperatur erhitzt wird.

4. Verfahren nach Anspruch 1,
**dadurch gekennzeichnet,**
daß bei einem mehrschichtigen Aufbau der Lackschicht zumindest die sichtseitig außenliegende Lage (21), insbesondere aus Klarlack, endgehärtet wird.

5. Verfahren nach Anspruch 1,
**dadurch gekennzeichnet,**
daß bei einer Lackschicht (1) mit wenigstens einer farb- und/oder effektgebenden Schicht (22) und einer sichtseitig zumindest mittelbar darauf angeordneten sichtseitig außenliegenden Lage (21) die außenliegende Lage (21) endgehärtet wird und daß die farb- und/oder effektgebende Schicht (22) bei der Endhärtung der außenliegenden Lage (21) in thermoplastischem Zustand verbleibt.

6. Verfahren nach Anspruch 1,
**dadurch gekennzeichnet,**
daß bei einem mehrschichtigen Aufbau der Lackschicht (1) die sichtseitig außenliegende Lage (21), insbesondere aus Klarlack, duroplastisch endgehärtet wird.

7. Verfahren nach Anspruch 1,
**dadurch gekennzeichnet,**
daß bei einem mehrschichtigen Aufbau der Lackschicht (1) die sichtseitig außenliegende Lage (21), insbesondere aus Klarlack, duroplastisch endgehärtet wird und daß als Binder für die außenliegende Lage (21) Phosphazen und/oder Phosphazenharz und/oder deren Derivate und/oder deren Vorprodukte gewählt wird.

8. Verfahren nach Anspruch 1,
**dadurch gekennzeichnet,**
daß bei einem mehrschichtigen Aufbau der Lackschicht (1) die sichtseitig außenliegende Lage (21), insbesondere aus Klarlack, duroplastisch endgehärtet wird und daß als Binder für die außenliegende Lage (21) Urethan und/oder dessen Derivate und/oder dessen Vorprodukte gewählt wird.

9. Verfahren nach Anspruch 1,
**dadurch gekennzeichnet,**
daß bei einem mehrschichtigen Aufbau der Lacksnicht (1) die sichtseitig außenliegende Lage (21), insbesondere aus Klarlack, duroplastisch endgehärtet wird und daß als Binder für die außenliegende Lage (21) Acrylate und/oder deren Derivate und/oder deren Vorprodukte gewählt wird.

10. Verfahren zur Herstellung einer Lackfolie, insbesondere für ein Applikationsverfahren, bei dem eine Lackschicht mit einer Kleberschicht versehen wird, und bei dem die Lackschicht klebefrei teilgehärtet und in diesem Zustand bis zur Applikation auf einem Substrat zwischengespeichert wird,
**dadurch gekennzeichnet,**
daß die Lackschicht (1) zumindest mittelbar auf eine endlos umlaufende glatte Unterlage (3) aufgetragen und mit der Kleberschicht (4) versehen wird und daß die Lackschicht (1) und/oder die Kleberschicht (4) von der Unterlage (3) abgelöst wird.

11. Verfahren nach Anspruch 10,
**dadurch gekennzeichnet,**
daß die Lackschicht (1) vor dem Ablösen von der Unterlage (3) mit der Kleberschicht (4) versehen wird.

12. Verfahren nach Anspruch 10,
**dadurch gekennzeichnet,**
daß auf der Unterlage (3) zuerst die Kleberschicht (4) und auf die Kleberschicht (4) die Lackschicht (1) aufgebracht wird.

13. Verfahren nach Anspruch 10,
**dadurch gekennzeichnet,**
daß auf der Unterlage (3) die Kleberschicht (4) und die Lackschicht (1) aufgebracht wird, und daß nach dem Ablösen der mit der stabilisierenden Kleberschicht (4) versehenen Lackschicht (1) die Lackschicht (1) teilgehärtet wird.

14. Verfahren nach Anspruch 10,
**dadurch gekennzeichnet,**
daß die Lackschicht (1) auf der Unterlage (3) teilgehärtet wird.

15. Verfahren nach Anspruch 10,
**dadurch gekennzeichnet,**
daß die Lackschicht (1) auf der Unterlage (3) teilgehärtet wird, und daß die teilgehärtete und stabile Lackschicht (1) nach dem Ablösen von der Unterlage (3) mit der Kleberschicht (4) versehen wird.

16. Verfahren nach Anspruch 10,
**dadurch gekennzeichnet,**
daß als Binder für die Lackschicht (1) oder im Falle eines mehrlagigen Aufbaus der Lackschicht (1) wenigstens für deren außenseitige Lage (21) Phosphazen und/oder Phosphazenharz und/oder deren Derivate und/oder deren Vorprodukte gewählt wird.

17. Verfahren nach Anspruch 10,
**dadurch gekennzeichnet,**
daß als Binder für die Lackschicht (1) oder im Falle eines mehrlagigen Aufbaus der Lackschicht (1) wenigstens für deren außenseitige Lage (21) Urethan und/oder dessen Derivate und/oder dessen Vorprodukte gewählt wird.

18. Verfahren nach Anspruch 10,
**dadurch gekennzeichnet,**
daß als Binder für die Lackschicht (1) oder im Falle eines mehrlagigen Aufbaus der Lackschicht (1) wenigstens für deren außenseitige Lage (21) Acrylate und/oder deren Derivate und/oder deren Vorprodukte gewählt wird.
